# EUROPEAN PATENT APPLICATION

(11) **EP 1 734 443 A1**
(43) Date of publication of application: **20.12.2006**
(21) Application number: 05388048.0
(22) Date of filing: 14.06.2005
(51) Int. Cl.: G06F 9/445, H04M 1/725

(54) **Access to a mobile device from another device**

(71) Applicant: Telefonaktiebolaget L M Ericsson AB (Publ), 164 83 Stockholm (SE)
(72) Inventor: Wartenberg, Fredrik, 431 59 Mölndal (SE); Balachandran, Kumar, Cary, NC 27511 (US); Eker, Johan, 223 55 Lund (SE)
(74) Representative: Boesen, Johnny Peder

(57) **Abstract**

This invention relates to a method (and a corresponding a system and devices) of providing access to functionality on a mobile device (100) from an external device (101), the method comprising the steps of: establishing a communications link (121) between the mobile device (100) and the external device (101), using data (115) stored on the external device (101) to access functionality on the mobile device (100) via said communications link (121), where said data (115) comprises an API (Application Program Interface) or a structured set of commands (111) being specific for the mobile device (100) and where said data (115) has been automatically transferred to the external device (101) from the mobile device (100).

In this way, an API provisioning server (110) on the mobile device (100) can publish (and transmit) the mobile device specific API to an external device (101) allowing access to the mobile device's functionality remotely, i.e. on the external device, using the mobile device's API. This is done automatically and do not require the manual installation of software. Further, it does not require device drivers and the like to be installed on the external device as the request(s) to the mobile device is done using the mobile device's API.

## Description

### FIELD OF THE INVENTION

The invention relates to a method of providing access to functionality on a mobile device from an external device. The invention further relates to a system for providing access to functionality on a mobile device from an external device, and an accordingly mobile device and external device. Further, the invention relates to a computer readable medium having stored thereon instructions for causing one or more processing units to execute the method according to the invention.

### BACKGROUND OF THE INVENTION

Mobile or portable devices usually have powerful and feature-rich APIs (Application Programming Interface) for interacting with applications running on the mobile or portable device (forth only denoted mobile device). These APIs give access to device specific functionality, which most likely would be beneficiary for remote or external (to the mobile device) devices like a network connected desktop PC or the like.

As the APIs often are proprietary and there is no standard means to interface the mobile device to an external device, the exporting of the mobile APIs is not feasible in practice.

Traditionally, mobile devices have often been accessed via AT-commands using a serial communication link between the external device and the mobile device; indeed most mobile data standards such as the Global System for Mobile Communications (GSM) or the General Packet Radio Service (GRPS) specify an extended Hayes modem command set to allow access to a limited selection of functionality on the mobile device. In addition, standards such as Bluetooth, a short range radio communications protocol specification that can be used to connect wireless phones and other devices, provide standards that allow Object Exchange (OBEX) for specific functions such as file transfer and synchronizations of contacts.

However, AT commands possess many shortcomings such as the inability to handle spontaneous events (or unsolicited information flow) from the model to the calling entity, and the inability to handle two or more parallel sessions. Further, AT commands are a large set of unstructured commands and do not provide a well structured API, which makes it very hard to use the functionality in a structured way from within an application on an external device. Object Exchange, although an improvement over the Hayes command set, is tailored for specific types of information and is limited by the same disadvantages as stated earlier.

Another solution is to use distributed software such as Microsoft's DCOM (Distributed Component Object Model) or CORBA (Common Object Request Broker Architecture) by a consortium of venders through the Object Management Group.

DCOM is a well known set of concepts and program interfaces where client program objects can request services from server program objects on other computers in a network. DCOM is based on COM (Component Object Model) that provides a set of interfaces allowing clients and servers to communicate within the same computer (running Windows).

CORBA is a well known architecture and specification for creating, distributing, and managing distributed program objects in a network that allows programs at different locations to communicate via a network through an 'interface broker'.

The approaches of such distributed software components require that the external device is equipped with special software that has to be adapted for every platform to be supported. Although feasible, these implementations are generally not readily available and ready for use for a large number of mobile devices. Further, for mobile devices, device constraints often imply a use of a proprietary variant of the above-mentioned approaches.

Patent specification EP 1 347 623 A1 discloses a method where a mobile device can be coupled to an accessory device by downloading the needed interface software from the accessory device. However, the interface software is a piece of software for a very specific purpose, namely a device driver to the accessory device and thus requires software on the mobile device that is specific for the accessory device. The mobile device would need to be provided with device driver software for each accessory device that is to be connected.

Patent specification US 2002/0107907 A1 discloses a system and method for remotely accessing a client in a client server environment using an API or command verbs. However, no disclosure of providing the API or command verbs to the accessing device is given. Further, the API or command verbs has to be understood by both the client and server, i.e. the API or command verbs is machine independent, which limits the provided functionality to the common subset of functions. Thereby no functionality which only exist on the client can be provided remotely on the server.

### SUMMARY OF THE INVENTION

It is an object of the invention to provide a method of providing access to functionality on a mobile device from an external (to the mobile device) device that solves the above-mentioned shortcomings of prior art.
It is a yet another object to enable access to functionality on a mobile device from an external device in a simple, flexible and efficient way.

Furthermore, such access is provided using standard communications protocols and without requiring pre-installed or resident mobile device specific software on the external device.

These objectives, among others, are achieved by a method of providing access to functionality on a mobile device from an external device, the method comprising the steps of: establishing a communications link between the mobile device and the external device, using data stored on the external device to access functionality on the mobile device via said communications link, where said data comprises an API (Application Program Interface) or a structured set of commands being specific for the mobile device, and automatically transferring said data from said mobile device to said external device using said communications link between said mobile and said external device, where the automatic transfer is done prior to the use of said data.

In this way, access to functionality to the mobile device from the external (to the mobile device) device is provided via an API or a structured set of commands without having to provide special software for the external devices, since the mobile device automatically provides the mobile device specific API or structured set of commands to the external device using a communications module acting as a server and being executed on the mobile device, which may be accessed from the external device. This can e.g. be done using standard communications protocols like HTTP, TCP/IP, SOAP, UDP, etc. or by other means. Please note, the external device may itself be a mobile or portable device. The server (mobile device) and the client (external device) may either interact in a stateless fashion or the established communication between the devices may result in a state preserving session. The session(s) may be established on top of the communication link between the two devices.

Automatic transfer implies that the data is transferred from the mobile device without an explicit "load" request but rather as an effect of a request for execution of a specific function and via a standard protocol, already supported by the external device before establishing contact with the mobile device. For example, this could be as simple as a request of the external device to browse the phone book or contact list within the mobile device. Alternatively, the external device may merely try to access a default web page at an IP address belonging to the mobile device, and one reachable from the external device.

Further, the automatic transfer of said data from said mobile device to said external device provides a radical simplification of the way in which the user interacts with functionality provided by said APls. For example, manual installation on the external device by the user of any software needed to access functionality on the mobile device is not required. Further, it does not require device drivers and the like to be installed on the external device as the request(s) to the mobile device is done using the mobile device's API. Instead, the user may be made aware of the presence of new functionality as a consequence of initiating connectivity between the mobile device and the remote accessory (such connectivity may e.g. be via a cable or wireless means) and is free to utilize such functionality as is provided.

In one embodiment, said data further comprises application data being executable by the external device and related to functionality on the mobile device. The executable code may be platform independent (which is preferred) or platform dependent. One example of executable application data is e.g. one or more Java classes, one or more Java applets or run-time modules if the external device is Java enabled. Other examples could e.g. be binary code executable by the external device, .NET (C#, Visual Basic) code/applications, RUBY script byte code, p-code, etc. In principal, any platform independent (or platform dependent) code segments or executables applications may be used.

In this way, it is possible to provide applications, communications drivers, software components, objects, etc. automatically that typically are distributed on a CD or via the Internet and requires manual installation by a user.

In one embodiment, the method further comprises the step of:
- generating a request at the external device on the basis of a user selection or an automatically generated command and using said API (Application Program Interface) or structured set of commands for the mobile device, where the request represents functionality to be executed on the mobile device,
- transmitting the request from the external device to the mobile device, and
- executing the request on the mobile device.

In one optional embodiment, the method comprises the step of transmitting information relating to the executed request (e.g. an answer, result, etc.) to the external device.

In one embodiment, the communications link between the mobile device and the external device is established based on an event at the external device.

In one embodiment, the data comprising an API (Application Program Interface) or a structured set of commands is one or more Java applets, one or more Java classes, one or more .NET applications, one or more RUBY scripts or one or more platform independent or platform dependent code segments or executables.

In one embodiment, the functionality relates to one or more selected from the group of:
- a phonebook functionality,
- a calendar functionality,
- a digital media player functionality,
- a backup functionality,
- a GPS receiver functionality for time and position,
- a device management functionality,
- a secure storage functionality,
- digital certificate handling,
- access to services on a WAN (Wide Area Network) (e.g. multimedia file download and playing), or
- network connectivity from the external device.

In one embodiment, the mobile device is selected from the group of:
- a mobile telephone,
- a PDA,
- a GPS receiver,
- a watch (e.g. comprising a computational unit and a communications unit),
- a digital camera or video recorder, or
- a digital audio and/or video player or recorder.

In one embodiment, the external device is selected from the group of:
- a mobile telephone,
- a PDA,
- a GPS receiver
- a display screen
- a digital camera or video recorder,
- a watch,
- a stationary computer,
- a laptop,
- a home network hub,
- a TV,
- a set-top box,
- a projector,
- home audio equipment, or
- a digital audio and/or video player or recorder.

The present invention also relates to a system corresponding to the method of the present invention. More specifically, the invention relates to a system for providing access to functionality on a mobile device from an external device, the system comprising: a mobile device and an external device, each device comprising a communications module for establishing a communications link between the mobile device and the external device, wherein the external device is adapted to use data stored on the external device in order to access functionality on the mobile device via said communications link, where said data comprises an API (Application Program Interface) or a structured set of commands being specific for the mobile device and where said data has been automatically transferred to the external device from the mobile device.

Advantageous embodiments of the system are defined in the sub-claims and are described in detail in the following. The embodiments of the system correspond to the embodiments of the method and have the same advantages for the same reasons.

The present invention also relates to a mobile device providing access to its functionality to an external device, the mobile device comprising: a communications module for establishing a communications link between the mobile device and an external device, where the external device is adapted to use data stored on the external device to access functionality on the mobile device via said communications link and where said data comprises an API (Application Program Interface) or a structured set of commands being specific for the mobile device, and wherein the communications module is further adapted to: automatically transfer said data to said external device using said communications link between said devices, where the automatic transfer is done prior to the use of said data by the external device.

The present invention also relates to an external device enabling access to functionality of a mobile device, the external device comprising: a communications module for establishing a communications link between the external device and a mobile device, wherein the external device is adapted to use data stored on the external device to access functionality on the mobile device via said communications link, where said data comprises an API (Application Program Interface) or a structured set of commands being specific for the mobile device, and wherein the communications module is further adapted to: automatically receive said data from said mobile device using said communications link between said devices, where the automatic transfer is done prior to the use of said data by the external device.

Further, the invention also relates to a computer readable medium having stored thereon instructions for causing one or more processing units to execute the method according to the present invention.

### BRIEF DESCRIPTION OF THE DRAWINGS

These and other aspects of the invention will be apparent from and elucidated with reference to the illustrative embodiments shown in the drawings, in which:
Figure 1 schematically illustrates a mobile and an external device and their communications according to an embodiment of the present invention;
Figure 2 schematically illustrates a block diagram of an embodiment of a device according to the present invention; and
Figure 3 illustrates a schematic block diagram of an embodiment of a system according to the present invention.

Throughout the figures, same reference numerals indicate similar or corresponding features.

### DESCRIPTION OF PREFERRED EMBODIMENTS

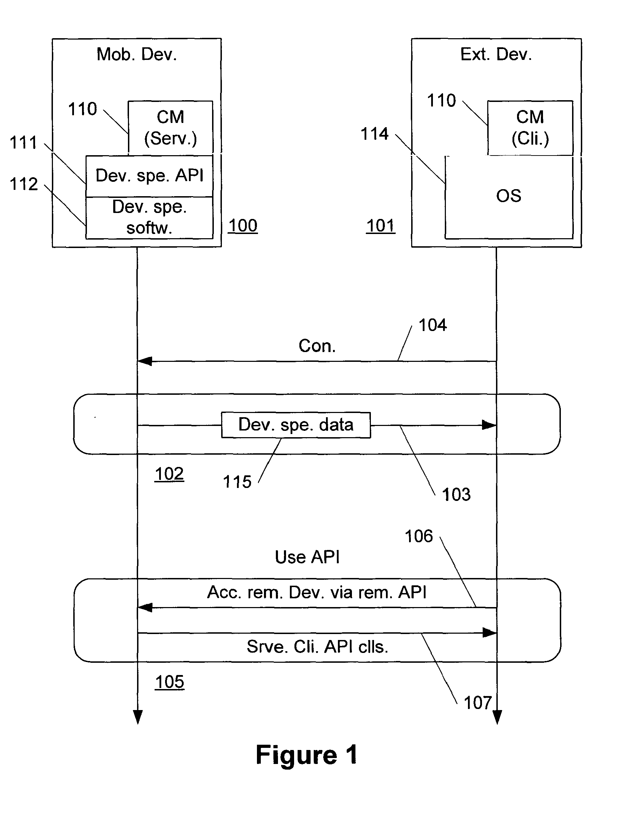

Figure 1 schematically illustrates a mobile and an external device and their communications according to an embodiment of the present invention. Shown are a mobile device (100) and an external device (101).

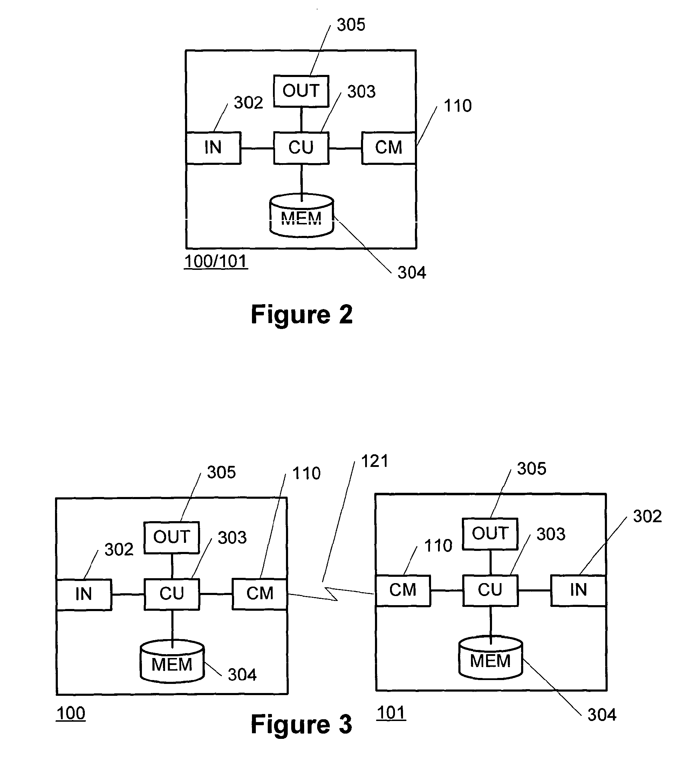

The mobile device (100) comprises a communications module (110) that is set up to act as a server, as will be described later. The mobile device (100) further comprises an API (Application Program Interface), a structured set of commands (111) or the like that is specific for the mobile device (100), i.e. the API or set of commands is device specific or dependent for the particular type of mobile device (100). The API or set of structured commands (forth only referred to as API) gives access to device specific functionality, software objects, components and/or programs, etc. (112) which is beneficial to be able to use on an external device. The device specific or dependent functionality, software objects, components and/or programs is stored in a suitable memory or storage, as explained later in connection with Figure 2.

The external (to the mobile device) device (101) comprises a communications module (110) that is set up to act as a client (when communicating with a mobile device according to the present invention and as described in greater detail in the following). The external device (101) further comprises an operating system (OS) (114) responsible for handling various aspects, as generally known in the art. The external device may itself be a mobile or portable device. It is to be understood that it is equally sufficient if the communications module (110) of the mobile device is set up to act as a client while the communications module (110) of the external device is set up to act as a server. Further, both data push and data pull models are equally sufficient.

According to one embodiment of the present invention, the communications module (110) implementing the server on the mobile device (100) awaits (when active) a connection from another (external) device (101). In case of a request for a connection (104), a (wired or wireless) first communications link is established (or used for functionality) and the mobile device specific API (111), in the form of device specific data (115), is exported by uploading or transferring (103) e.g. a set of (Java) proxy classes to the connecting external device (101) thereby enabling the external device (101) to obtain access to the mobile device's (100) functionality using the transferred API.

The auto-uploading of the mobile device specific API (102) may be done either the first time that a specific external device (101) connects or always or on request/by initiation.

The auto-uploading of the mobile device specific API (102) using the communications link is initiated based on an event or trigger from the external device (101).

Examples of where the auto-uploading is initiated based on the external device (101) are e.g. user initiation, on connecting the device (100; 101), etc.

After the device specific data (115) comprising the API has been transferred to the external device (101) the remote device (101) may then transmit one or more requests (106) to the mobile device (100) using the device specific API that now is known and present on the external device (101) whereby access on the mobile device via the uploaded API is obtained. The mobile device then executes API calls (107) received from the external device, which may or may not include sending information, data, etc. back to the external device. Usually, at least an acknowledging confirmation is sent back.

The steps (105) involved in using the functionality of the mobile device (100) from the external device (101) may be repeated as appropriate.

In effect, the API provisioning server (110) on the mobile device (100) can then automatically publish (and transmit) the mobile device specific API to an external device (101) allowing access to the mobile device's functionality remotely, i.e. on the external device, using the mobile device's API via standard protocol stacks already present on the external devices (e.g. SOAP, HTTP, TCP/IP).

This can be done automatically and does not require the manual installation of software. Further, it does not require pre-installed or resident device drivers and the like to be on the external device as the request(s) to the mobile device is done using the mobile device's API.

The mobile device specific data may e.g. be uploaded in the form of binary code, Java code or classes, etc. and may also take care of marshalling and de-marshalling function parameters, remote procedure calls, keeping track of instantiated software components, etc. in addition to exposing and transferring the mobile device specific API to the external device.

Marshalling and de-marshalling are well-known techniques useful in relation to passing data objects in a memory across a network to another host or persisted to storage where the in-memory representation of the objects is converted to a suitable out-of-memory format or the other way around.

The transferred mobile device specific data may e.g. also comprise application data that is executable by the external device (101) and is related to functionality on the mobile device (100). The transferred data (115) may e.g. be in the form of HTML code, one or more Java applets and/or a one or more Java classes accessible e.g. via a Java class-loader. In this way, it is possible to provide applications, communications drivers, software components, objects, etc. automatically that typically are distributed on a CD or via the Internet and requires manual installation by a user. Additional functionality like Marshalling and Demarshalling (see above), for keeping track of stub components (see later) life cycles on the mobile device or for handling callback messages from the mobile device may also be included in the transferred data (115) e.g. in the form of Java classes, or similar structures. The executable code may be platform independent (which is preferred) or platform dependent. Other examples of executable application data is e.g. binary code executable by the external device, .NET (C#, Visual Basic) code/applications, RUBY script byte code, p-code, etc. In principal, any platform independent (or platform dependent) code segments or executables applications may be used.

The connection between the communications modules (110) preferably uses standard protocols like SOAP, HTTP, UDP or TCP/IP. A web-browser on the external device could be used to access the server implementation (110) on the mobile device in a dedicated way.

The functionality of the mobile device may e.g. relate to phonebook functionality, calendar functionality, digital media player functionality, a backup functionality, device management functionality, a GPS receiver functionality for time and position, network connectivity from the external device, digital certificate handling, access to services on a WAN (Wide Area Network), secure storage functionality, or other types of functionality.

In one exemplary application, a simple web-server is implemented by the communications module (110) on the mobile device. On the external device, a PPP dial-in connection could be used to establish IP communication between the external device and the mobile device. From the external device, a URL for the mobile device is then accessed. The mobile device serves this request by sending device specific data in the form of a web page comprising an embedded Java Applet to the external device. The Java Applet could be any type of application using at least some of the functionality of the mobile device and e.g. some functionality of the external device. The Java Applet could include functions and/or classes representing accesses (e.g. in the form of Proxys) to the mobile devices APIs. As another example, the mobile device could have a component based API that can be described by means of an IDL (Interface Description Language or Interface Definition Language). In this way, the API included in the Java Applet could directly correspond to the functionality of the mobile device's software components.

An IDL is a language that completely specifies data and command syntax corresponding to an interface. An IDL allows the construction of a compiler that can translate the description of the interface into a conventional high-level language such as C, Java, etc. Therefore, the IDL specification for an interface allows automatic generations of the server code to implement the infterface, as well as proxy stubs on the client side. Subsequently, an IDL would also enable a program or object written in one language to communicate with another program written in an unknown language. This is especially advantageous in distributed environments where it is important that new objects are able to be sent to any platform environment and discover how to run in that environment. The API may e.g. be a component based API e.g. described in terms of an IDL. Each component could be represented by a Java proxy class or the like.

When the Java Applet starts running on the external device it uses the established IP connection to route API calls from the Applet to the mobile device. Routing may e.g. include marshalling of any function parameters and may e.g. include identification to the API call to be invoked on the mobile device. Routing may e.g. also include de-marshalling of the returned API calls from the mobile device. The server or mobile device may e.g. also keep track of the invoked interfaces, instantiated objects, etc.

When this communication is established, the Java Applet may use the functionality on the mobile device as if it were local to the external device.

If an asynchronous model is needed for taking care of messages from the mobile device to the external device, then the Java Applet may implement a server thread that listens for outgoing messages from the mobile device and where the mobile device needs to act as a client in case of outgoing messages. Further, the mobile device could also use functionality available on the external device to extend its capabilities. Such functionality could e.g. be a network connection or other functionalities.

In another exemplary application, the external device could e.g. be a digital camera implementing a TCP/IP stack, a web-browser and a Java Virtual Machine and the mobile device could e.g. be a mobile phone. The camera and phone could optionally implement a wireless interface such as e.g. IEEE 802.11g, Bluetooth or likewise. A user could then use a WAN via the phone to access a web page that downloads an applet that allows sending a picture as part of a MMS message. Further, the applet could allow upload of the picture to a website. In this way, a user could use the IP network of the phone for functions being selected on the camera without any user interaction. Alternatively, a dial-up network from the camera to the phone could also be used. The standards-compliant components such as a TCP/IP stack and a web browser are convenient vehicles for use according to the present invention; however it is sufficient to have means for getting the Java applet into a run-time mechanism on the remote side.

Other applications could e.g. be access of music files, such as MP3s, or video files from a distribution channel on the network by a peripheral portable music or video device or browsing of files on the network by utilising a proxy API on the phone that presents the files in a format compatible with a remote file system. A phone would then simply have to present an applet to the peripheral device via a browser that is able to translate the remote file system to a format that is compatible with the peripheral device. Such formats would be similar to those formats used by standardised file systems on compact flash memory, etc.

It is to be understood that the device specific data and the requests may be transferred via one or more intermediate devices.

Figure 2 schematically illustrates a block diagram of an embodiment of a device according to the present invention. Shown is a device (100; 101) which can represent both a mobile device (100) and an external device (101). The device (100; 101) comprises a data input unit (302), a processing unit (303) configured to receive the data input via input unit (302), a memory (304) and/or another storage device connected to the processing unit (303), a communications module (110) and an output unit (305), both connected to the processing unit (302).

In some embodiments, the data input unit (302) comprises user input means such as push buttons, a keypad, a keyboard, a touch screen, a pointing device, e.g. a computer mouse, a stylus, a mouse pad, or the like, allowing a user to enter data and selections. The communications module (110) may comprise any circuit or device suitable for data communication via a wired or a wireless channel. Examples of data interfaces include but are not limited to an infrared port, e.g. an IrDa port, a radio-frequency interface such as Bluetooth, 802.11x or WiFi or similar, a serial port, such as USB, FireWire, or the like.

The processing unit (303) may comprise a suitably programmed microprocessor and/or any other suitable processing means, such as Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

The memory (304) may be any suitable type of memory or storage device, such as a non-volatile memory, e.g. flash memory, EPROM, EEPROM, a hard disk, or the like.

The output unit (305) includes any suitable, circuit or device for issuing feedback, data, etc., e.g. in the form of a graphical user interface (GUI), to a user such as an LCD display or the like.

The device described herein may be a special-purpose device or a combined device providing functionality as described herein. In some embodiments, the device may be embodied as a suitably programmed general-purpose data processing device, such as a handheld computer, a PDA, or the like, or a suitably configured/programmed personal communications device, such as a mobile telephone, or the like.

The mobile device may e.g. be a mobile telephone, a PDA, a GPS receiver, a watch (e.g. comprising a computational unit and a communications unit), a digital camera or video recorder, a digital audio and/or video player or recorder, etc.

The external device may e.g. be a mobile telephone, a PDA, a digital camera or video recorder, a watch (e.g. comprising a computational unit and a communications unit), a stationary computer, a laptop, a home network hub, a TV, a set-top box, a projector, home audio equipment, or a digital audio and/or video player or recorder.

Figure 3 illustrates a schematic block diagram of an embodiment of a system according to the present invention. Shown is a system comprising a mobile device (100) and an external device (101) communicating via a communications link (121) as described earlier. The devices correspond to the ones explained in connection with Figure 2.

Although some embodiments have been described and shown in detail, the invention is not restricted to them, but may also be embodied in other ways within the scope of the subject matter defined in the following claims.

The invention can be implemented by means of hardware comprising several distinct elements, and by means of a suitably programmed microprocessor. In the device claims enumerating several means, several of these means can be embodied by one and the same item of hardware, e.g. a suitably programmed microprocessor, one or more digital signal processor, or the like. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer or processor. In the system and device claims enumerating several means, several of these means can be embodied by one and the same item of hardware. The mere fact that certain measures are recited in mutually different dependent claims does not indicate that a combination of these measures cannot be used to advantage.

## Claims

1. A method of providing access to functionality on a mobile device (100) from an external device (101), the method comprising the steps of:
- establishing a communications link (121) between the mobile device (100) and the external device (101),
- using data (115) stored on the external device (101) to access functionality on the mobile device (100) via said communications link (121), where said data (115) comprises an API (Application Program Interface) or a structured set of commands (111) being specific for the mobile device (100), and
- automatically transferring said data (115) from said mobile device (100) to said external device (101) using said communications link (121) between said mobile (100) and said external device (101), where the automatic transfer is done prior to the use of said data (115).

2. A method according to claim 1, wherein the step of automatically transferring said data (155) is transferred from the mobile device without an explicit load request but as an effect of a request for execution of a specific function via a standard protocol, already supported by the external device before establishing contact with the mobile device.

3. A method according to claims 1 - 2, wherein said data (115) further comprises application data being executable by the external device (101) and related to functionality on the mobile device (100).

4. A method according to claims 1 - 3, where said method further comprises the step of:
- generating a request at the external device (101) on the basis of a user selection or an automatically generated command and using said API (Application Program Interface) or structured set of commands (111) for the mobile device (100), where the request represents functionality to be executed on the mobile device (100),
- transmitting the request from the external device (101) to the mobile device (100), and
- executing the request on the mobile device (101).

5. A method according to claims 1 - 4, wherein said communications link (121) between the mobile device (100) and the external device (101) is established based on an event at the mobile device (100) or an event at the external device (101).

6. A method according to claims 1 - 5, wherein said data (115) comprising an API (Application Program Interface) or a structured set of commands (111) is:
- one or more Java applets
- one or more Java classes,
- one or more .NET applications,
- one or more RUBY scripts or
- one or more platform independent or platform dependent code segments or executables.

7. A method according to claims 1 - 6, wherein said functionality relates to one or more selected from the group of:
- a phonebook functionality,
- a calendar functionality,
- a digital media player functionality,
- a backup functionality,
- a GPS receiver functionality for time and position,
- a device management functionality,
- network connectivity from the external device,
- digital certificate handling,
- access to services on a WAN (Wide Area Network), or
- a secure storage functionality.

8. A method according to claims 1 - 7, wherein said mobile device (100) is selected from the group of:
- a mobile telephone,
- a PDA,
- a GPS receiver,
- a digital camera or video recorder,
- a watch, or
- a digital audio and/or video player or recorder.

9. A method according to claims 1 - 8, wherein said external device (101) is selected from the group of:
- a mobile telephone,
- a PDA,
- a digital camera or video recorder,
- a watch,
- a stationary computer,
- a laptop,
- a home network hub,
- a TV,
- a set-top box,
- a projector,
- home audio equipment, or
- a digital audio and/or video player or recorder.

10. A system for providing access to functionality on a mobile device (100) from an external device (101), the system comprising:
- a mobile device (100) and an external device (101), each device (100; 101) comprising a communications module (110) for establishing a communications link (121) between the mobile device (100) and the external device (101),
wherein the external device (101) is adapted to use data (115) stored on the external device (101) in order to access functionality on the mobile device (100) via said communications link (121), where said data (115) comprises an API (Application Program Interface) or a structured set of commands (111) being specific for the mobile device (100), and
wherein the communications module (110) of each device (100; 101) is adapted to
- automatically transfer said data (115) from said mobile device (100) to said external device (101) using said communications link (121) between said devices (100; 101), where the automatic transfer is done prior to the use of said data (115),

11. A system according to claim 10, wherein said data (115) further comprises application data being executable by the external device (101) and related to functionality on the mobile device (100).

12. A system according to claims 10 - 11, wherein said automatic transfer of said data (155) is transferred from the mobile device without an explicit load request but as an effect of a request for execution of a specific function via a standard protocol, already supported by the external device before establishing contact with the mobile device.

13. A system according to claims 11 - 14, where said system further comprises the step of:
- generating a request at the external device (101) on the basis of a user selection or an automatically generated command and using said API (Application Program Interface) or structured set of commands (111) for the mobile device (100), where the request represents functionality to be executed on the mobile device (100),
- transmitting the request from the external device (101) to the mobile device (100), and
- executing the request on the mobile device (101).

14. A system according to claims 10 - 13, wherein said communications link (121) between the mobile device (100) and the external device (101) is established based on an event at the mobile device (100) or an event at the external device (101) or an event at another device.

15. A system according to claims 10 - 14, wherein said data (115) comprising an API (Application Program Interface) or a structured set of commands (111) is:
- one or more Java applets
- one or more Java classes,
- one or more .NET applications,
- one or more RUBY scripts or
- one or more platform independent or platform dependent code segments or executables.

16. A system according to claims 10 - 15, wherein said functionality relates to one or more selected from the group of:
- a phonebook functionality,
- a calendar functionality,
- a digital media player functionality,
- a backup functionality,
- a device management functionality,
- a GPS receiver functionality for time and position,
- network connectivity from the external device,
- digital certificate handling,
- access to services on a WAN (Wide Area Network), or
- a secure storage functionality.

17. A system according to claims 10 - 16, wherein said mobile device (100) is selected from the group of:
- a mobile telephone,
- a PDA,
- a GPS receiver,
- a watch,
- a digital camera or video recorder, or
- a digital audio and/or video player or recorder.

18. A system according to claims 10-17, wherein said external device (101) is selected from the group of:
- a mobile telephone,
- a PDA,
- a digital camera or video recorder,
- a watch,
- a stationary computer,
- a laptop,
- a home network hub,
- a TV,
- a set-top box,
- a projector,
- home audio equipment, or
- a digital audio and/or video player or recorder.

19. A mobile device (100) providing access to its functionality to an external device (101), the mobile device (100) comprising:
- a communications module (110) for establishing a communications link (121) between the mobile device (100) and an external device (101), where the external device (101) is adapted to use data (115) stored on the external device (101) to access functionality on the mobile device (100) via said communications link (121) and where said data (115) comprises an API (Application Program Interface) or a structured set of commands (111) being specific for the mobile device (100), and
wherein the communications module (110) is further adapted to:
- automatically transfer said data (115) to said external device (101) using said communications link (121) between said devices (100; 101), where the automatic transfer is done prior to the use of said data (115) by the external device (101).

20. An external device (101) enabling access to functionality of a mobile device (100), the external device (101) comprising:
- a communications module (110) for establishing a communications link (121) between the external device (101) and a mobile device (100),
wherein the external device (101) is adapted to use data (115) stored on the external device (101) to access functionality on the mobile device (100) via said communications link (121), where said data (115) comprises an API (Application Program Interface) or a structured set of commands (111) being specific for the mobile device (100), and
wherein the communications module (110) is further adapted to:
- automatically receive said data (115) from said mobile device (100) using said communications link (121) between said devices (100; 101), where the automatic transfer is done prior to the use of said data (115) by the external device (101).

21. A computer readable medium having stored thereon instructions for causing one or more processing units to execute the method according to any one of claims 1-9.
